# EUROPÄISCHE PATENTANMELDUNG

(11) **EP 0 882 898 A1**
(43) Veröffentlichungstag der Anmeldung: **09.12.1998**
(21) Anmeldenummer: 97122873.9
(22) Anmeldetag: 24.12.1997
(51) Int. Cl.: F16B 37/04

(54) **Verankerungseinheit**

(30) Priorität: 02.06.1997 DE 19722778
(71) Anmelder: Mefa-Dübelfabrik Friedrich Krätzer GmbH & Co., 74635 Kupferzell (DE)
(72) Erfinder: Deffner, Heinz, 75635 Kupferzell (DE)
(74) Vertreter: Patentanwälte Bartels und Partner

(57) **Zusammenfassung**

Die Erfindung betrifft eine Verankerungseinheit (30) für eine Montageschiene (1) zur Befestigung von Rohren oder dergleichen Gegenständen mit einer Schienenöffnung, die beiderseits von Schienenlängswänden (3) begrenzt ist, wobei die Schienenlängswände (3) an ihren einander zugewandten Innenseiten Haltevorsprünge (5) aufweisen, bei der eine Gewindeplatte (25) der Verankerungseinheit (30) dafür vorgesehen ist, diese Haltevorsprünge (5) zu hintergreifen, und eine Profilplatte (10) vorgesehen ist, die dazu geeignet ist, an der Außenfläche (6) der Schienenlängswände (3) anzuliegen, wobei die Gewindeplatte (25) und die Profilplatte (10) zum Einspannen der Haltevorsprünge (5) der Montageschiene (1) in ihrem Abstand zueinander verschiebbar sind und im wesentlichen drehfest miteinander verbunden sind. Dadurch, daß die Profilplatte (10) mit Spreizschenkeln (12) versehen ist, daß an diesen Spreizschenkeln (12) die Gewindeplatte (25) verschiebbar befestigt ist, wobei hierfür die Spreizschenkel (12) der Profilplatte (10) durch Ausnehmungen (28) in der Gewindeplatte (25) ragen, ist eine Verankerungseinheit geschaffen, die einfach aufbaut und problemlos an der Montageschiene montierbar ist.

## Beschreibung

Die Erfindung betrifft eine Verankerungseinheit für eine Montageschiene gemäß dem Oberbegriff des Anspruches 1.

Derartige Verankerungseinheiten werden beispielsweise eingesetzt, um in Verbindung mit Montageschienen Rohrleitungen an den Wänden, der Decke oder dem Boden eines Gebäudes zu befestigen.

Eine Verankerungseinheit für eine Montageschiene der eingangs genannten Art ist aus der DE 44 47 456 C2 bekannt. Diese Verankerungseinheit weist ein Stützteil auf, das dazu geeignet ist, in einer hinterschnittenen Montageschiene aufgenommen zu werden. Das Stützte ist mittig mit einer Gewinderbohrung versehen, in die ein Gewindestab eingeschraubt ist. Auf diesen Gewindestab ist ein Gegenhalter geschoben, der mit Hilfe einer Kontermutter, die auf den Gewindestab geschraubt ist, gegen das Stützteil verspannt werden kann. Zwischen dem Stützte und dem Gegenhalter kann ein Abstandshalter vorgesehen sein, der in Längsrichtung des Gewindestabes komprimierbar ist. Die Verankerungseinheit ist quer zur Schienenlängsrichtung in die Schienenöffnung der Montageschiene einführbar. Die Montageschiene weist dabei beiderseits Haltevorsprünge an den Enden der Schienenlängswände auf. Diese Haltevorsprünge werden zwischen dem Stützteil und dem Gegenhalter mit Hilfe der Kontermutter eingespannt, so daß die Verankerungseinheit an der Montageschiene fixiert ist.

Nachteil dieser bekannten Ausführungsform ist, daß die Verankerungseinheit relativ kompliziert aufgebaut ist und zur Gewährleistung eines einfachen Einbaus einen Abstandhalter zwischen dem Stützteil und dem Gegenhalter erfordert. Ferner ist beim Einsetzen der Verankerungseinheit in die Montageschiene keine Vorfixierung der Lage ohne Anziehen der Kontermutter möglich, so daß die Verankerungseinheit verrutscht, wenn sie nicht gehalten wird.

Der vorliegenden Erfindung liegt daher die Aufgabe zugrunde, eine Verankerungseinheit für eine Montageschiene zur Verfügung zu stellen, die diese Nachteile nicht aufweist und insbesondere einfach aufgebaut ist, und trotzdem problemlos eingebaut werden kann.

Diese Aufgabe wird durch eine Verankerungseinheit mit den Merkmalen des Anspruches 1 gelöst. Die Ausgestaltung der Verankerungseinheit als Profilplatte mit Spreizschenkeln, an denen eine Gewindeplatte verschiebbar befestigt ist, wobei die Spreizschenkel jeweils durch Ausnehmungen in der Gewindeplatte ragen, ermöglicht eine sehr einfache Ausgestaltung der Verankerungseinheit. Besondere Maßnahme für eine Vorfixierung der Verankerungseinheit sind nach dem Einsetzen in eine Montageschiene nicht erforderlich. Insbesondere kann der Gewindestift mit Kontermutter bzw. eine Schraube für die Vorfixierung entfallen.

Vorzugsweise handelt es sich bei der Profilplatte um ein Stanzbiegeteil bei dem die Spreizschenkel nach unten gebogen sind. Dabei kann vorgesehen sein, daß die Spreizschenkel in ihrem oberen Bereich einander näher als an ihren unteren Enden sind. Dies kann zum einen durch einen Biegewinkel von < als 90° und zum anderen durch einen gewissen Biegeradius im oberen Bereich der Spreizschenkel ermöglicht werden.

Zur Sicherung der Verbindung zwischen der Profilplatte und der Gewindeplatte können die Spreizschenkel an ihren untern Enden breiter als die minimale Länge der Ausnehmungen in der Gewindeplatte sein, wodurch ein Auseinanderfallen der beiden Teile sicher verhindert werden kann. Die Länge der Ausnehmungen in der Gewindeplatte kann beispielsweise durch das Herabbiegen von Eckbereichen der Gewindeplatte zumindest bereichsweise etwas verringert werden. Durch das Herabbiegen von diagonal gegenüberliegenden Eckbereichen läßt sich ferner das Einsetzen der Verankerungseinheit in eine Montageschiene erleichtern. Ein Mindestabstand zwischen Profil- und Gewindeplatte ist nicht erforderlich.

Alternativ hierzu oder zur Erhöhung der Sicherheit der Verbindung kann vorgesehen sein, daß der Abstand der Ausnehmungen zwischen dem maximalen und dem minimalen Abstand der Spreizschenkel liegt, so daß die Gewindeplatte in einem bereichsweise vorgegebenen Abstand zur Profilplatte angeordnet ist. Dies erleichtert das Einsetzen insbesondere, wenn der minimale Abstand etwa der Dicke der Haltevorsprünge entspricht.

Gemäß einer bevorzugten Ausgestaltungsform der Gewindeplatte ist dieselbe an zwei diagonal gegenüberliegenden Enden abgerundet und leicht nach unten gebogen. Die Abrundung muß dabei nicht vollständig und insbesondere nicht mit einem durchgehend gleichbleibenden Radius ausgestaltet sein, sondern kann sich auf eine Abrundung der Querseite der Gewindeplatte beschränken, die endet, wenn die Tangente an die Abrundung etwa parallel zu den Biegelinien verläuft. Dabei vergrößert sich der Radius von der Querseite ausgehend. Das Herabbiegen bietet den bereits zuvor erwähnten Vorteil der leichteren Einsetzbarkeit der Verankerungseinheit.

Besonders vorteilhaft ist das Vorsehen eines Gewindestifts der in die Gewindeplatte eingeschraubt ist. Der Gewindestift ragt dabei durch eine Durchgangsbohrung, die etwa mittig in der Profilplatte vorgesehen ist. Um im Einsatzfall für die endgültige Fixierung der Verankerungseinheit an der Montageschiene die Gewindeplatte gegen die Profilplatte zu verspannen kann auf den Gewindestift eine Kontermutter geschraubt werden, so daß beim Anziehen der Kontermutter die besagte Verspannung erfolgt. An dem freien Ende des Gewindestifts, das aus der Verankerungseinheit herausragt, können beliebige Bauteile befestigt werden. Alternativ kann eine Schraube vorgesehen werden, bei der der Kopf der Schraube die Funktion der Kontermutter übernimmt. Durch entsprechende Ausgestaltung der Profilplatte können die Bauteile, die mit Hilfe der Verankerungseinheit an der Montageschiene befestigt werden sollen, direkt an der Profilplatte angebracht werden.

Weitere vorteilhafte Ausgestaltungen sind den folgenden Unteransprüchen zu entnehmen.

Im folgenden wird die vorliegende Erfindung anhand eines Ausführungsbeispiels näher erläutert.
Es zeigen:
- Fig. 1: das Ausführungsbeispiel in eingebautem Zustand,
- Fig. 2: die Gewindeplatte in perspektivischer Darstellung,
- Fig. 3: die Profilplatte in perspektivischer Darstellung.

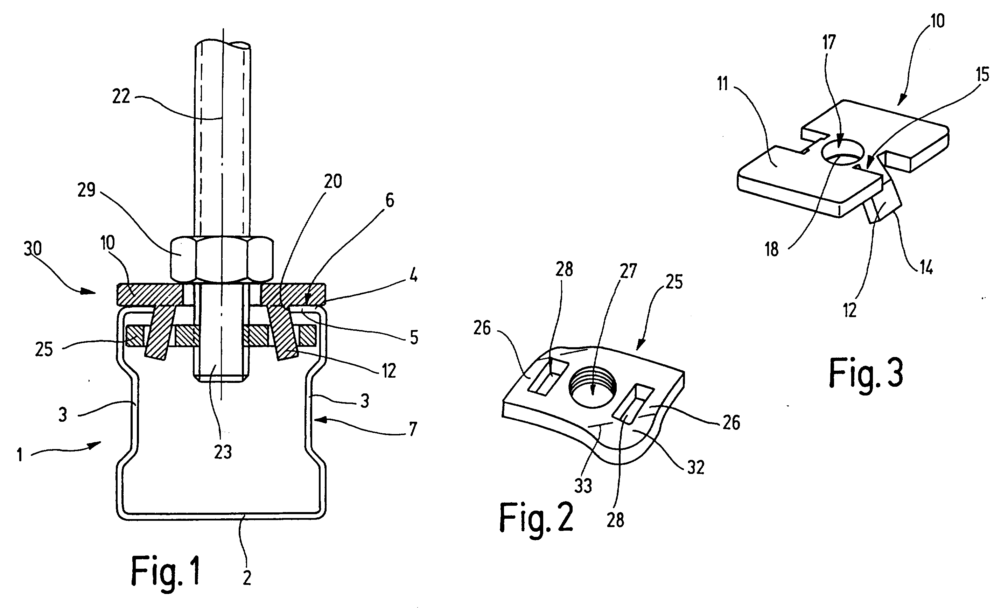

Figur 1 zeigt eine Montageschiene 1, mit einer Rückenwand 2 und zwei symmetrisch zur Längsachse angeordneten Schienenlängswänden 3. Die Schienenlängswände 3 sind an ihrer von der Rückenwand 2 abgewandten Seite 4 um 90° nach innen umgebogen, so daß zwei Haltevorsprünge 5 zur Verfügung gestellt werden und die in Fig. 1 nach oben zeigenden Außenflächen 6 der beiden Haltevorsprünge 5 eine gemeinsame Ebene bilden. Die Schienenlängswände 3 weisen etwa mittig angeordnet jeweils eine in Längsrichtung der Montageschiene 1 verlaufende Einbuchung 7 auf.

An den Außenflächen 6 der Montageschiene 1 liegt eine Profilplatte 10 an. Die Profilplatte 10 ist ein Stanzbiegeteil, das einen doppel T-förmigen ebenen Bereich 11 und zwei Spreizschenkel 12 aufweist. Die Spreizschenkel 12 sind in einem Winkel kleiner 90° nach unten gebogen und derart profiliert, daß sie an ihrem unteren Ende 14 breiter sind als im zentralen, an die Profilplatte 10 angrenzenden Bereich 15. Die Profilplatte 10 ist derart an der Montageschiene 1 angeordnet, daß die Spreizschenkel 12 in zwischen die Schienenlängswände 3 ragen. Ferner liegen die Spreizschenkel 12 an den einander zugewandten Enden 20 der Haltevorsprünge 5 der Montageschiene 1 an, wobei die Montageschiene 1 unter leichter Vorspannung steht.

Mittig zwischen den Spreizschenkeln 12 ist die Profilplatte 10 mit einer Ausnehmung 17 in Form einer Durchgangsbohrung 18 versehen. Ein Gewindestift 22 ragt durch die Durchgangsbohrung 18. Dabei ist der Gewindeaußendurchmesser des Gewindestifts 22 kleiner als der Durchmesser der Durchgangsbohrung 18.

Der Gewindestift 22 ist mit seinem unteren Ende 23 in eine als Stützteil dienende Gewindeplatte 25 geschraubt, die zwischen den Schienenlängswänden 3 angeordnet ist. Die Gewindeplatte 25 ist im wesentlichen rechteckförmig, wobei sie mittig eine Gewindebohrung 27 mit einem dem Gewindestift 22 entsprechenden Durchmesser aufweist. In Längsrichtung der Gewindeplatte 25 sind etwa mittig in den restlichen Materialpartien 26 zwei quer zur Längsachse der Gewindeplatte 25 verlaufende etwa rechteckförmige Ausnehmungen 28 vorgesehen. Durch jede der Ausnehmungen 28 ist je ein Spreizschenkel 12 der Profilplatte 10 geführt. Die Gewindeplatte 25 ist dadurch fest mit der Profilplatte 10 verbunden, daß zum einen die Spreizschenkel 12 nicht parallel zueinander verlaufen und zum anderen die quer zur Längsachse der Gewindeplatte 25 verlaufende Länge der Ausnehmungen 28 etwa geringer als die maximale Breite der Spreizschenkel 12 an deren unteren Enden 14 ist wohingegen im oberen Bereich der Spreizschenkel 12 ausreichend Spiel vorhanden ist. Eine problemlose Montage ist mit Hilfe einer Temperaturdifferenz der Profilplatte 10 und der Gewindeplatte 25 möglich, alternativ kann auch ein Einpressen erfolgen.

Die Profilplatte 10 bildet zusammen mit der Gewindeplatte 25, dem Gewindestift 22 und einer Kontermutter 29, die dem Verspannen der Gewindeplatte 25 gegenüber der Profilplatte 10 dient, eine Verankerungseinheit 30. Die Einzelheiten der Ausgestaltung der Gewindeplatte 25 sind insbesondere der Figur 2 zu entnehmen.

Der Einbau der Verankerungseinheit 30 in eine Montageschiene 1 erfolgt folgendermaßen: Die Verankerungseinheit 30 wird derart auf die Montageschiene 1 aufgesetzt, daß die Gewindeplatte 25 zwischen den Schienenlängswänden 3 angeordnet ist. Dabei verlaufen die Längsachsen der Montageschiene 1 und der Gewindeplatte 25 parallel zueinander. Durch Drehen der gesamten Verankerungseinheit 30, gemäß dem vorliegenden Ausführungsbeispiel im Uhrzeigersinn gelangen die Spreizschenkel 12 in Anlage an die Enden 20 der Schienenlängswände 3 dabei werden die Schienenlängswände 3 während der Verdrehung der Verankerungseinheit 30 nach außen gebogen und bleiben auch nach erfolgter Drehung um 90° unter leichter Vorspannung. Zur Erleichterung des Einsetzens der Verankerungseinheit 30 sind zwei diagonal gegenüberliegende Ecken 32 der Gewindeplatte 25 abgerundet und leicht nach unten gebogen, wodurch sich die Biegelinie 33 ergibt. Durch die nach unten gebogenen Eckbereiche der Gewindeplatte 25 ist kein Abstandshalter erforderlich. Es wird vielmehr automatisch ausreichend Raum für die Haltevorsprünge 5 zwischen Gewindeplatte 25 und Profilplatte 10 zur Verfügung gestellt, wenn die Verankerungseinheit 30 gegenüber der Montageschiene 1 verdreht wird. Beim Verdrehen der Verankerungseinheit 30 gegenüber der Montageschiene 1 erfolgt ein Aufweiten der Schienenlängswände 3 aufgrund der Spreizschenkel 12, die mit ihrem oberen Bereich 15 an den Enden 20 der Haltevorsprünge 4 entlanggleiten. Mit zunehmendem Fortschreiten der Drehung, die insgesamt 90° beträgt, läßt die Spreizwirkung der Spreizschenkel 12 nach, bis in der Endstellung nur noch eine relativ geringe Spreizwirkung vorliegt. Bei einer Breite der Montageschiene 1 von ca. 35 mm und einer Dicke der Schienenlängswände 3 von ca. 1 mm beträgt die Aufspreizung der Montageschiene 1 in Höhe der Enden 20 ca. 1 mm.

Die Drehung der Verankerungseinheit 30 wird ferner durch eine entsprechende Profilierung der Montageschiene 1 begünstigt. Am Ausführungsbeispiel dienen u.a. die Einbuchtungen 7 der Erhöhung der Elastizität der Schienenlängswände 3. Aufgrund der Vorspannung ist die Verankerungseinheit 30 bereits direkt nach dem Einsetzen und ohne jegliches Anziehen der Kontermutter 29 relativ sicher in der Montageschiene 1 fixiert, so daß die Verankerungseinheit 30 sich nur noch durch eine Kraft, die parallel zur Längsachse der Montageschiene 1 wirkt, verschieben läßt. Greifen Kräfte an der Verankerungseinheit 30 an, die nicht parallel zur Längsachse der Montageschiene 1 wirken, so ist ein Verschieben der Verankerungseinheit 30 nicht mehr möglich, da sich die Spreizschenkel 12 in Zusammenwirkung mit der Gewindeplatte 25 gegen die nach innen gebogenen Seiten 4 der Schienenlängswände 3 verspannen. Zur abschließenden Fixierung der Verankerungseinheit 30 gegenüber der Montageschiene 1 wird die Kontermutter 29 angezogen, wodurch die Gewindeplatte 25 in Richtung auf die Gewindeplatte 10 zu bewegt wird und dadurch die Seiten 4 der Montageschiene 1 einklemmen.

Zur Erhöhung der Haftreibung zwischen der Verankerungseinheit 30 und der Montageschiene 1 können eine oder mehrere Flächen der Verankerungseinheit 30 und/oder der Montageschiene 1 aufgerauhte oder profilierte Oberflächen aufweisen. An die Stelle des Reibschlusses kann auch Formschluß treten.

Das Lösen der Verankerungseinheit 30 von der Montageschiene 1 erfolgt in umgekehrter Reihenfolge. Nach dem Lockern der Kontermutter 29 wird die Verankerungseinheit 30 entgegen dem Uhrzeigersinn gedreht und aus der Montagschiene 1 entnommen. Gegebenenfalls läßt sich die Verankerungseinheit 30 auch in Längsrichtung der Montageschiene 1 verschieben bis sie an einem Ende der Montageschiene 1 aus derselben entnommen werden kann.

Alternativ zum beschriebenen Ausführungsbeispiel können die Spreizschenkel 12 der Profilplatte 10 senkrecht nach unten gebogen sein. Die Gewindeplatte 25 wird dadurch verschiebbar an der Profilplatte 10 gehalten, daß die Spreizschenkel 12 in ihrem unteren Bereich etwas breiter als in ihrem oberen Bereich sind. Zur endgültigen Fixierung der Verankerungseinheit 30 in der Montageschiene 1 ist anstelle des Gewindestifts 22 eine Schraube vorgesehen, deren Kopf die Funktion der Kontermutter 29 übernimmt. Aufgrund der Ausgestaltung der Profilplatte 10 können Bauteile beispielsweise mit Hilfe einer weiteren Schraubverbindung direkt an der Profilplatte befestigt werden. Natürlich sind hierfür zusätzlich zu den doppel-T-förmigen ebenen Bereichen 11 weitere Bereiche vorgesehen, die für ein entsprechendes Anbringen eines zusätzlichen Bauteils geeignet sind. Beispielsweise kann die Profilplatte 10 der derart ausgestaltet sein, daß mit ihrer Hilfe eine weitere Montageschiene 1 in einem vorgegebenen Abstand und/oder Winkel zur ersten Montageschiene 1 angeordnet werden kann. Hierfür muß der weitere Bereich entsprechend dem eben beschriebenen Bereich ausgestaltet sein.

## Patentansprüche

1. Verankerungseinheit (30) für eine Montageschiene (1) zur Befestigung von Rohren oder dergleichen Gegenständen mit einer Schienenöffnung, die beiderseits von Schienenlängswänden (3) begrenzt ist, wobei die Schienenlängswände (3) an ihren einander zugewandten Innenseiten Haltevorsprünge (5) aufweisen, bei der eine Gewindeplatte (25) der Verankerungseinheit (30) dafür vorgesehen ist, diese Haltevorsprünge (5) zu hintergreifen, und eine Profilplatte (10) vorgesehen ist, die dazu geeignet ist, an der Außenfläche (6) der Schienenlängswände (3) anzuliegen, wobei die Gewindeplatte (25) und die Profilplatte (10) zum Einspannen der Haltevorsprünge (5) der Montageschiene (1) in ihrem Abstand zueinander verschiebbar sind und im wesentlichen drehfest miteinander verbunden sind, dadurch gekennzeichnet, daß die Profilplatte (10) mit Spreizschenkeln (12) versehen ist, daß an diesen Spreizschenkeln (12) die Gewindeplatte (25) verschiebbar befestigt ist, wobei hierfür die Spreizschenkel (12) der Profilplatte (10) durch Ausnehmungen (28) in der Gewindeplatte (25) ragen.

2. Verankerungseinheit (30) nach Anspruch 1, dadurch gekennzeichnet, daß die Profilplatte (10) ein Stanzbiegeteil ist und daß die Spreizschenkel (12) in ihrem oberen Bereich (15) einander näher als an ihren Enden (14) sind.

3. Verankerungseinheit (30) nach Anspruch 1 oder 2, dadurch gekennzeichnet, daß die Spreizschenkel (12) in ihren weiteren Enden (14) breiter als im oberen Bereich (15) sind, wobei die Breite der Spreizschenkel (12) an ihren unteren Enden (14) größer als die minimale Länge der Ausnehmungen (28) in der Gewindeplatte (25) ist.

4. Verankerungseinheit (30) nach einem der vorhergehenden Ansprüche, da durch gekennzeichnet, daß die Spreizschenkel (12) an ihren Enden (14) einen größeren Abstand voneinander haben als die Ausnehmungen (28) der Gewindeplatte (25) und daß die Spreizschenkel (12) in ihrem oberen Bereich (15) näher zusammenliegen, als die Ausnehmungen (28) der Gewindeplatte (25).

5. Verankerungseinheit (30) nach einem der vorhergehenden Ansprüche, dadurch gekennzeichnet, daß zwei diagonal gegenüberliegende Ecken der Gewindeplatte (25) abgerundet und leicht nach unten gebogen sind, wobei jede der Biegelinien (33) zumindest durch einen Eckbereich der jeweiligen Ausnehmungen (28) verläuft.

6. Verankerungseinheit (30) nach einem der vorhergehenden Ansprüchen, dadurch gekennzeichnet, daß in die Gewindeplatte (25) ein Gewindestift (22) oder eine Schraube eingeschraubt ist, die die Profilplatte (10) durchdringen.
